# EUROPEAN PATENT APPLICATION

(11) **EP 1 094 684 A2**
(43) Date of publication of application: **25.04.2001**
(21) Application number: 00122802.2
(22) Date of filing: 19.10.2000
(51) Int. Cl.: H04R 1/00

(54) **Sound producing device for an electronic instrument such as a telephone**

(30) Priority: 22.10.1999 JP 30176799
(71) Applicant: Citizen Electronics Co., Ltd., Fujiyoshida-shi, Yamanashi-ken (JP)
(72) Inventor: Watanabe, Shigehisa, c/o Citizen Electr. Co., Ltd., Fujiyoshida-shi, Yamanashi-ken (JP)
(74) Representative: Grünecker, Kinkeldey, Stockmair & Schwanhäusser Anwaltssozietät

(57) **Abstract**

A sound producing device has an electroacoustic transducer mounted in a case. A sound discharging nozzle is projected from the case and communicated with an upper chamber above the electroacoustic transducer.

## Description

### BACKGROUND OF THE INVENTION

The present invention relates to a sound producing device and an electronic instrument provided with the sound producing device.

An electronic instrument such as a portable telephone is provided with a sound producing device having a sound producer for producing telephone ring. The sound producing device is mounted in a case of the electronic instrument.

The sound emitted from the sound producing device is reflected from walls in the case. Consequently, reflected sound waves interfere with each other or are attenuated, which renders the sound to be indistinct. The attenuation of the sound waves causes the sound pressure to reduce. If the sound pressure reduces in the portable telephone, the telephone ring can not be confirmed.

In order to resolve the above described problems, it is necessary to emit the sound without leaking the sound in the case.

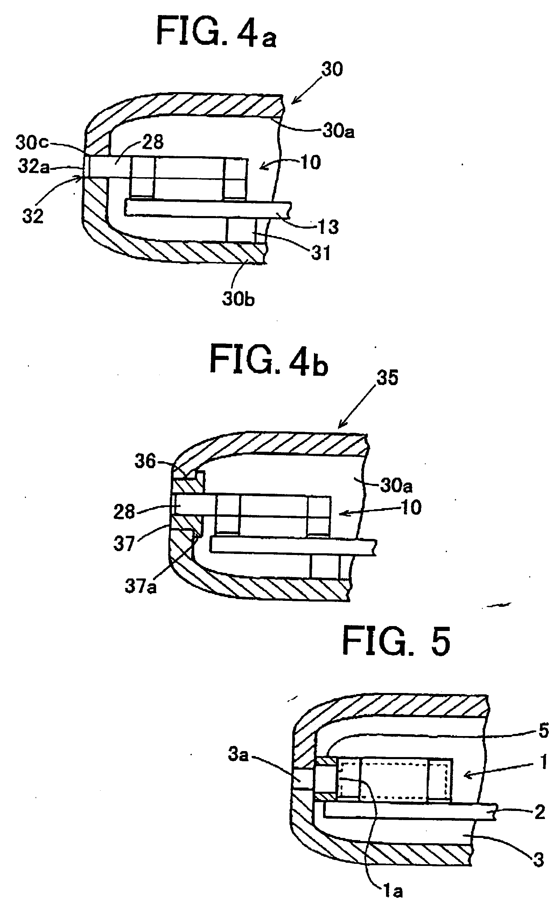

Fig. 5 shows a conventional sound producing device having a device for preventing the leakage of the sound. A sound producing device 1 is securely mounted on a substrate 2 secured to a case 3 of a portable telephone as an electronic instrument. The sound producing device 1 has a buzzer (not shown) as an electroacoustic transducer.

The sound producing device 1 has a sound discharge hole 1a, and the case 3 has a sound discharge hole 3a opposite the sound discharge hole 1a. A sound guide pipe 5 is provided between walls surrounding the sound discharge holes 1a and 3a so as to discharge the emitted sound without leaking in the case 3.

However, the sound guide pipe 5 causes the number of parts of the sound producing device 1 and the number of steps for manufacturing the device to increase. Further, it is difficult to accurately coincide the sound guide pipe with both the holes 1a and 3a.

### SUMMARY OF THE INVENTION

An object of the present invention is to provide sound producing device which is simple in construction.

Another object of the present invention is to provide an electronic instrument which can be easily manufactured.

According to the present invention, there is provided a sound producing device to be mounted in an electronic instrument, comprising a case, an electroacoustic transducer mounted in the case, and a sound discharging nozzle projected from the case and communicated with an upper chamber above the electroacoustic transducer so as to discharge a sound produced by the electroacoustic transducer.

The device further comprises a substrate secured to the case and mounting the electroacoustic transducer, the nozzle is projected from the case in parallel with the substrate.

The present invention further provides an electronic instrument comprising a first case, a sound producing device mounted in the first case, the sound producing device comprising a second case, and electroacoustic transducer mounted in the second case and a sound discharging nozzle projected from the case and communicated with an upper chamber above the electroacoustic transducer so as to discharge a sound produced by the electroacoustic transducer, the sound discharging nozzle being inserted in an opening formed in the first case.

The first case comprises an upper case and a lower case, the upper case has a downward recess, the opening is formed by combining the upper case and the lower case.

These and other objects and features of the present invention will become more apparent from the following detailed description with reference to the accompanying drawings.

### BRIEF DESCRIPTION OF DRAWINGS

Fig. 1 is a perspective view showing a sound producing device according to the present invention;
Fig. 2a is a plan view of the sound producing device according to the present invention;
Fig. 2b is a front view of the sound producing device according to the present invention;
Fig. 2c is a reverse view of the sound producing device according to the present invention;
Fig. 2d is a side view of the sound producing device according to the present invention;
Fig. 3 is an enlarged sectional side view of the sound producing device according to the present invention;
Fig. 4a is a sectional side view of an electronic instrument according to a first embodiment of the present invention.
Fig. 4b is a sectional side view of an electronic instrument according to a second embodiment of the present invention.
Fig. 5 is a sectional side view of a conventional electronic instrument.

### DETAILED DESCRIPTION OF THE PREFERRED EMBODIMENT

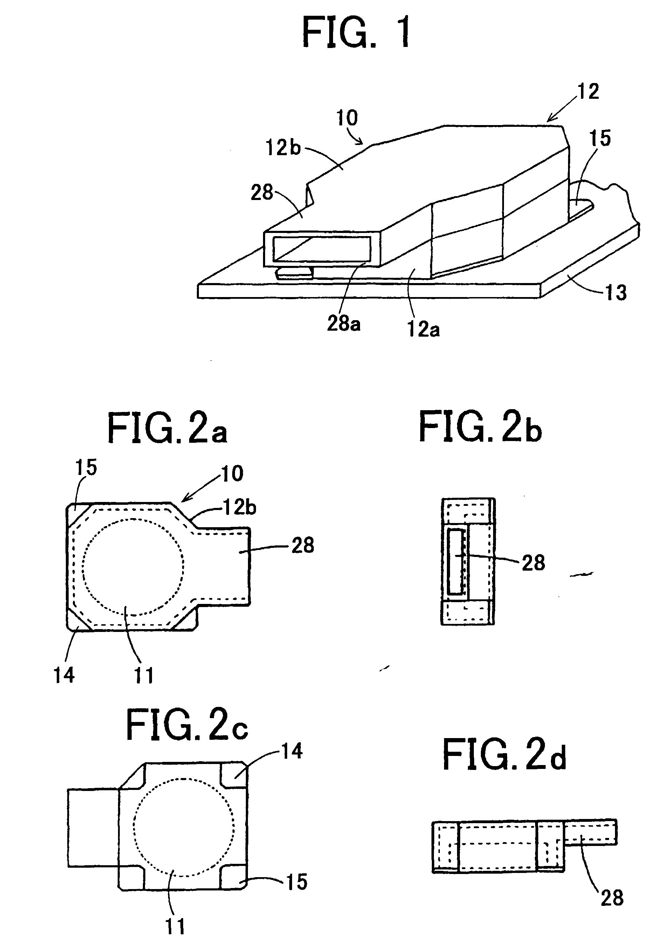

Referring to Figs. 1 to 3, an electromagnetic sound producing device 10 according to the present invention comprises a buzzer 11 as an electroacoustic transducer, which buzzer is contained in a casing 12. The case 12 comprises a plastic lower casing 12a secured to a substrate 13 and an upper plastic casing 12b fixed to the lower casing 12a. The four corners of the peripheral wall are chamfered, as shown in Fig. 2a.

Referring to Fig. 2c externally connecting terminals 14 and 15 are projected from the lower case 12a. The externally connecting terminals 14 and 15 are provided to connect a coil of the sound producing device with a circuit formed on the substrate 13.

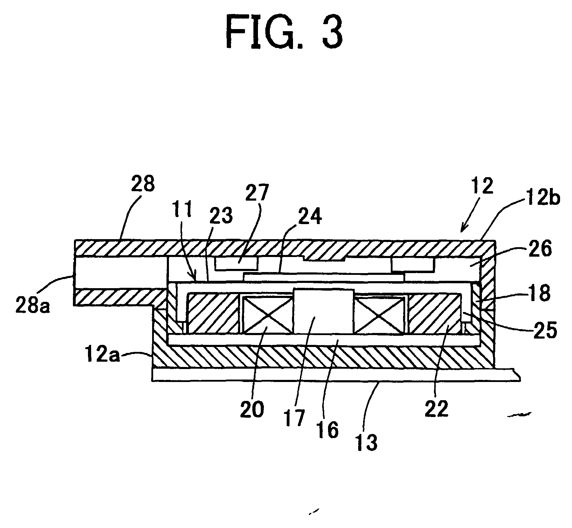

Referring to Fig. 3, the buzzer 11 comprises a magnetic yoke 16 secured to the lower casing 12a and having a center pole 17, and an armature supporting cylinder 18 made of brass securely mounted on the yoke 16 with adhesive. A coil 20 is mounted on the yoke 16, coaxial with the center pole 17. By mounting the coil, both ends of the coil are electrically connected to the respective externally connecting terminals 14 and 15 through inside terminals (not shown). A cylindrical permanent magnet 22 which is vertically magnetized is disposed on the yoke 16 so as to surround the coil 20.

An armature 23 having a weight 24 secured on the surface at the center thereof is mounted on the upper edge of the supporting cylinder 18 and attracted by the magnetic force of the permanent magnet 22 thereby defining a lower chamber 25 and an upper chamber 26 in the space inside the lower and upper casings 12a and 12b. The yoke 16, coil 20 and the permanent magnet 22 compose an actuator for driving the armature 23. The armature 23 is normally attracted to the supporting cylinder 18 by the magnetomotive force of the permanent magnet 22.

The upper casing 12b has a shape similar to that of the lower casing 12a. A plurality of armature stoppers 27 are formed on the underside of the upper case 12b, forming a small gap between the lower surfaces of stoppers 27 and the armature 23.

In accordance with the present invention, the sound producing device is provided with a sound discharging nozzle 28 having a rectangular sectional shape and projected from the upper casing 12b in parallel with the substrate 13 and communicated with the upper chamber 26.

Referring to 4a, the sound producing device 10 of present invention is mounted in a case 30 of a portable telephone. The case 30 comprises an upper case 30a and a lower case 30b. The upper case 30a has a downward recess 30c. Thus, by combining the upper and lower cases 30a and 30b, an opening 32 is formed. The opening 32 has a shape so as to receive the nozzle 28 of the sound producing device 10.

The substrate 13 of the sound producing device 10 is secured to a base 31 of the lower case 30b. The sound discharging nozzle 28 of the sound producing device 10 is mounted on the edge of the lower case 30b. When the upper case 30a is engaged with the lower case 30b, the downward recess 30c covers the nozzle 28. As a result, the nozzle 28 is inserted in the opening 32. In the assembled state, the opening end 28a (Fig. 1) of the nozzle 28 coincides with an opening end 32a of the opening 32.

In operation, the sound produced by the sound producing device 10 is discharged from the opening end 28a of the nozzle 28. Since the opening end 28a of the nozzle 28 is opened at the opening end 32a of the opening 32, the sound is entirely discharged from the case 30 without leaking in the case. Thus, clear sound emits from the nozzle 28.

Referring to Fig.4b showing the second embodiment of the present invention, a case 35 of a portable telephone has an opening 36 having a larger diameter than that of the first embodiment. In the opening 36, a cylindrical cushion 37 having a flange 37a is secured with adhesive. The sound producing device 10 is the same as the first embodiment in construction and operation. The nozzle 28 of the sound producing device 10 is inserted in the cushion 37.

In the second embodiment of the present invention, since the cushion 37 holds the nozzle 28, if the portable telephone drops, the nozzle is prevented from breaking.

In accordance with the present invention, since the sound guide pipe is not provided between the case of the electronic instrument and the sound producing device, the electronic instrument can be easily manufactured.

While the invention has been described in conjunction with preferred specific embodiment thereof, it will be understood that this description is intended to illustrate and not limit the scope of the invention, which is defined by the following claims.

## Claims

1. A sound producing device to be mounted in an electronic instrument, comprising:
a case;
an electroacoustic transducer mounted in the case;
a sound discharging nozzle projected from the case and communicated with an upper chamber above the electroacoustic transducer so as to discharge a sound produced by the electroacoustic transducer.

2. The device according to claim 1 further comprising a substrate secured to the case and mounting the electroacoustic transducer, said nozzle projecting from the case in parallel with the substrate.

3. An electronic instrument comprising a first case, a sound producing device mounted in the first case;
the sound producing device comprising:
a second case;
an electroacoustic transducer mounted in the second case;
a sound discharging nozzle projected from the second case and communicated with an upper chamber above the electroacoustic transducer so as to discharge a sound produced by the electroacoustic transducer;
the sound discharging nozzle being inserted in an opening formed in the first case.

4. The electronic instrument according to claim 3 wherein the first case comprises an upper case and a lower case, the upper case has a downward recess, said opening is formed by combining the upper case and the lower case.

5. The electronic instrument according to claim 3 further comprising a cylindrical cushion provided between an inside wall of the opening and an outside wall of the sound discharging nozzle.
